Europäisches Patentamt

European Patent Office

Office européen des brevets

(19)

(11) Numéro de publication : **0 610 119 A1**

(12)                     **DEMANDE DE BREVET EUROPEEN**

(21) Numéro de dépôt : **94400188.2**

(22) Date de dépôt : **28.01.94**

(51) Int. Cl.⁵ : **G06F 15/72**

(30) Priorité : **02.02.93 FR 9301095**

(43) Date de publication de la demande :
**10.08.94 Bulletin 94/32**

(84) Etats contractants désignés :
**DE FR GB**

(71) Demandeur : **THOMSON-CSF**
**173, Boulevard Haussmann**
**F-75008 Paris (FR)**

(72) Inventeur : **Arnaud, Rémi**
**Thomson-CSF,**
**SCPI,**
**B.P. 329**
**F-92402 Courbevoie Cedex (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

(54) Procédé d'élimination en temps réel des parties cachées d'images de synthèse.

(57)    Selon le procédé d'élimination en temps réel des parties cachées d'images de synthèse de l'invention on part d'une structure de données décomposant les objets à visualiser en facettes planes, on établit des liens entre facettes ayant des côtés partagés, et entre côtés partageant à chaque fois un même sommet, on balaye les lignes successives de l'image à visualiser, on établit la liste triée dans le sens de balayage des côtés intersectés par la ligne de balayage en cours, on établit la liste triée des segments à tracer, et, à chaque insertion d'un nouveau segment dans la liste des segments ouverts, on calcule la différence de profondeur entre le point d'insertion et les segments de la liste des segments ouverts.

FIG.6

Jouve, 18, rue Saint-Denis, 75001 PARIS

EP 0 610 119 A1

La présente invention se rapporte à un procédé d'élimination en temps réel (25 à 60 Hz par exemple) des parties cachées d'images de synthèse.

Pour éliminer les parties cachées d'images de synthèse, on a généralement recours à l'un des quatre procédés suivants: procédé "à priorité", procédé à lancer de rayon, procédé dit à "Z-buffer" et procédé à lignes de balayage.

Le premier de ces procédés connus consiste à précalculer dans l'espace-objet un ordre de visibilité (ou de priorité) pour toutes les faces des objets à représenter. Ce procédé a été décrit par R.A. SCHUMAKER, B. BRAND, M. GILLILAND et W. SHARP dans "A Study for applying computer generated images to visual simulation" du rapport technique de l'U.S. Air Force Human Resources Lab, de septembre 1969. Un procédé similaire a été décrit par M.E et R.G. NEWELL et T.L. SANCHA dans "A new approach to the shaded picture problem" de Proceedings ACM National Conference, 1972, page 443 et suivantes.

Ce procédé utilise une arborescence précalculée et l'exploite à chaque niveau de la chaîne de visualisation (processeur géométrique, processeur d'échantillonnage et processeur vidéo pour réaliser un tri final, juste avant le processeur vidéo).

Le deuxième procédé consiste à éliminer les parties cachées lors de l'échantillonnage. Il s'agit de lancer un rayon fictif entre l'oeil de l'observateur et chaque pixel de l'écran, et de calculer les intersections avec les objets de la scène afin de déterminer celui qui est devant. Il est à noter que cette méthode permet une qualité d'image très soignée, mais qu'il n'en existe aucune implémentation temps-réel.

Le troisième procédé est le plus simple. Il consiste à stocker dans un registre de profondeur du processeur vidéo, en plus des attributs RVB de chaque pixel, la profondeur en Z correspondant au pixel considéré. Ce procédé est câblé dans certains processeurs vidéo fonctionnant en temps réel (c'est-à-dire à un rythme de 25 à 60 images par seconde par exemple). Il a été décrit par M.E. CATMULL dans "A hidden surface algorithm with anti-aliasing" de SIGGRAPH' 78 Proceedings, Computer Graphics, 12(13), Août 1978.

Le quatrième procédé, qui comprend plusieurs variantes, a par exemple été décrit par G.S. WATKINS dans "A real-time visible surface algorithm", University of Utah, Computer Science Department, NTIS AD 76 1995 - mai 1968. Ce procédé n'a jamais été implanté tel quel en temps réel dans un processeur graphique parce qu'il est lent, que l'élimination des parties cachées se fait sur des segments théoriques horizontaux de hauteur nulle, qu'il ne permet ni de visualiser des surfaces transparentes, ni de faire des filtrages (seul le segment visible dans une plage est affiché), et que la modélisation des segments est insuffisante (on a affaire à des segments horizontaux de hauteur nulle, comme précisé ci-dessus).

La présente invention part du procédé à lignes de balayage et a pour objet un procédé d'élimination des parties cachées qui soit de mise en oeuvre plus simple que les procédés connus, qui puisse fonctionner en temps réel (de 25 à 60 images par seconde par exemple), ne nécessite pas de processeur dédié, et puisse gérer la transparence et le filtrage, et n'impose pas de convexité particulière aux éléments traités.

Le procédé conforme à l'invention part d'une structure de données décomposant les objets à visualiser en facettes planes, et il consiste à établir des liens entre facettes ayant des côtés partagés, et entre côtés partageant à chaque fois un même sommet, à balayer les lignes successives de l'image à visualiser, à établir la liste triée dans le sens du balayage des côtés intersectés par la ligne de balayage en cours, à établir la liste triée des segments à tracer, et, à chaque insertion d'un nouveau segment dans la liste des segments ouverts, à calculer la différence de profondeur entre le point d'insertion et les segments de la liste des segments ouverts. Un segment est une surface balayée par une ligne de balayage entre un côté gauche et un côté droit. Il se peut que la hauteur d'un segment soit inférieure à la hauteur d'une ligne de balayage (s'il s'agit d'un trait fin horizontal). Dans ce cas, on mémorise les hauteurs, mesurées par exemple à partir de la limite inférieure de la ligne de balayage considérée, des limites inférieure et supérieure de ce segment fin.

La présente invention sera mieux comprise à la lecture de la description détaillée d'un mode de mise en oeuvre, pris à titre d'exemple non limitatif et illustré par le dessin annexé, sur lequel :

- la figure 1 est une vue schématique en perspective d'un objet à visualiser, dont on a mis en évidence la structure topologique le décrivant ;
- les figures 2 à 5 sont des vues schématiques de faces d'un objet à visualiser, servant à définir les conventions utilisées pour la description topologique d'objets ;
- la figure 6 est un tableau résumant les données utilisées par le procédé de l'invention ;
- la figure 7 est une vue schématique de faces d'un objet, expliquant la façon de déterminer des faces auto-cachées ;
- la figure 8 est une vue montrant une hyperfacette à facettes coplanaires ;
- les figures 9 à 11 sont des vues schématiques définissant les hypercôtés utilisés dans l'invention ;
- les figures 12 et 13 montrent deux exemples d'objets à facettes confondues, que peut traiter le procédé de l'invention ;
- la figure 14 montre un exemple d'une facette particulière pour laquelle la disparition de deux côtés n'implique pas la disparition d'un segment, lorsque l'on applique le procédé de l'invention ;

- la figure 15 est un tableau à plusieurs vues montrant la façon dont le procédé de l'invention traite les cas où deux côtés s'intersectent ; et

- les figures 16 et 17 sont des vues schématiques explicitant le tri de côtés, conformément au procédé de l'invention.

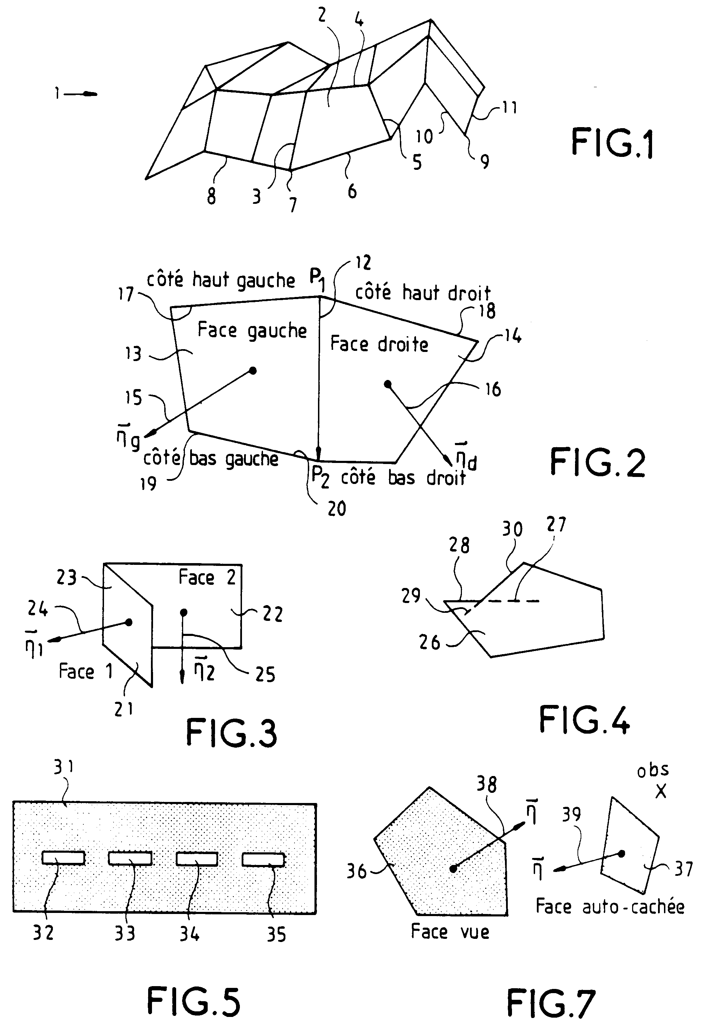

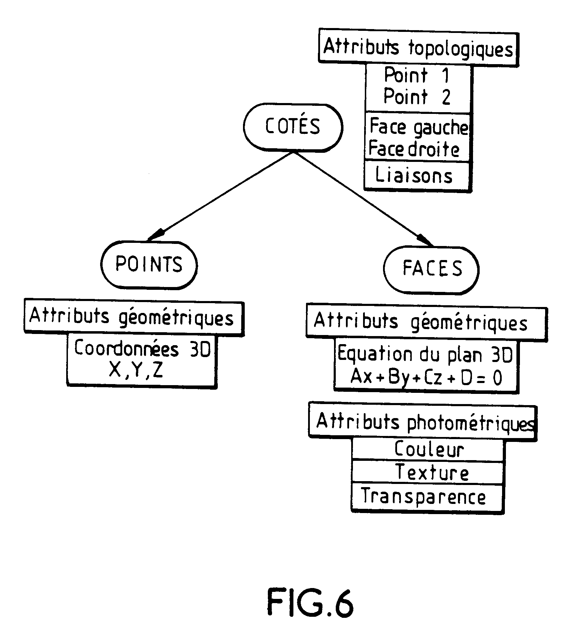

On a schématiquement représenté en figure 1 une structure topologique 1 décrivant un objet quelconque, que l'on appellera ci-dessous "hyperfacette". Cette structure est composée de faces planes (facettes) adjacentes qui correspondent le plus exactement possible aux faces de l'objet à représenter. Bien entendu, si les faces de l'objet à représenter sont planes, la correspondance est exacte, mais si elles sont courbes, la correspondance est d'autant meilleure que les facettes de la structure sont petites. Une telle représentation par polyèdres est basée sur le procédé décrit par B.G. BAUMGART dans l'article "A polyedron Representation for Computer vision", National Computer Conference, 1975, pages 589 à 596.

Une "hyperfacette" est décrite, dans une base de données, par une liste, non ordonnée, de côtés. Chaque côté est caractérisé par ses deux extrémités (dites "points"), ses deux faces adjacentes (ou sa face adjacente) et ses liaisons avec d'autres côtés.

On a schématiquement représenté en figure 1 une hyperfacette 1. Une facette plane de l'hyperfacette 1 est référencée 2. Cette facette 2 est bordée par quatre côtés référencés 3 à 6. Les côtés 3 à 5 sont partagés par deux facettes différentes. Ils sont dits "partagés". On remarquera qu'un coté ne peut être partagé par plus de deux facettes. Seul le côté 6 n'est pas partagé par deux facettes ; il appartient donc au bord de l'objet figuré par l'hyperfacette 1.

Un point est toujours partagé entre au moins deux côtés. Si un point n'était l'extrémité que d'un seul côté, la face bordée par ce côté ne serait pas refermée, ce qui est interdit pour une structure topologique. Ainsi, par exemple, dans la structure 1, le point 7 est partagé par les côtés 3, 6 et 8 (il constitue l'une des extrémités de chacun de ces côtés. Le point 9 est partagé par les côtés 10 et 11.

Selon une autre convention, les côtés des facettes sont orientés. On oriente un côté d'un point P1 vers le point P2. On a représenté en figure 2 un tel côté 12 partagé par deux faces 13, 14, et on a représenté les normales 15, 16 à ces faces ( par convention, ces normales sont dirigées vers l'extérieur de l'objet à représenter). Les faces 13 et 14 sont respectivement appelées face gauche et face droite. Les côtés des faces 13 et 14 partageant le point P1 sont référencés 17, 18 et appelés respectivement côté haut gauche et côté haut droit. Les côtés des faces 13, 14 partageant le point P2 sont référencés 19, 20 et respectivement appelés côté bas gauche et côté bas droit.

Selon la convention, deux faces ayant un côté partagé doivent être orientées de la même façon : leurs normales doivent pointer vers le même demi-espace intérieur ou extérieur à l'objet dont ces deux faces font partie. Cette règle facilite le traitement graphique de l'objet : deux faces ayant un côté partagé ne peuvent s'occulter mutuellement, alors qu'une élimination des parties cachées serait nécessaire si cette règle n'était pas respectée. Ainsi, par exemple, on a représenté en figure 3 deux faces 21, 22. Le côté 23 n'est pas un côté partagé au sens de cette règle. En effet, les normales respectives à ces faces, référencées 24, 25 pointent l'une vers le demi-espace extérieur à l'objet dont fait partie ces faces, et l'autre vers le demi-espace intérieur à cet objet. En fait, il aurait fallu considérer la face opposée à l'une des deux faces 22 ou 23.

On a représenté en figure 4 un exemple de face "concave" 26. Une face est dite concave lorsqu'au moins le prolongement de l'un de ses côtés la coupe. Elle est dite convexe dans le cas contraire. Ainsi, le prolongement 27 du côté 28 ou le prolongement 29 du côté 30 de la face 26 coupe cette face.

On a représenté en figure 5 un exemple de face concave rectangulaire trouée 31 comportant quatre trous rectangulaires 32 à 35. Le prolongement de l'un quelconque des trous 32 à 35 coupe la face 31, qui est donc bien concave.

On a représenté en figure 6 un tableau donnant les trois catégories d'éléments définissant la topologie d'une hyperfacette. Ces éléments sont les côtés, les points (extrémités des côtés) et les faces. de l'hyperfacette. Pour chaque catégorie d'éléments on définit des attributs :

- pour les côtés: ce sont les attributs topologiques, à savoir, pour chaque côté, les points P1 et P2 et les faces gauche et droite (ou l'une de ces faces si le côté n'est pas partagé), et les liaisons entre côtés ;

- pour les points: leurs attributs géométriques, c'est-à-dire leurs coordonnées dans l'espace (X, Y et Z) ;

- et pour les faces: leurs attributs géométriques et leurs attributs photométriques. Les attributs géométriques sont les équations, dans l'espace, des plans des faces (de la forme $Ax + By + Cz + D = 0$). Leurs attributs photométriques comportent: leur couleur, leur texture et leur transparence.

Une première étape du procédé de l'invention consiste à éliminer les faces auto-cachées, afin de simplifier les traitements subséquents du processeur géométrique.

Lorsque l'on observe un objet, on ne peut en voir certaines faces que si l'on se trouve dans un angle de vue particulier. On utilise cette propriété pour dire que si une face n'est pas orientée en direction de l'observateur, elle ne peut être vue par lui, et elle est alors dite auto-cachée. En figure 7, on a représenté à droite la position X d'un observateur et deux faces 36, 37, ainsi que les normales 38, 39, respectivement, à ces faces. La normale 38 se trouve dans le demi-espace (délimité par le plan de la face 36) vu de X, tandis que la normale 39 se trouve dans le demi-espace (délimité par le plan de la face 37) non vu de X.

Mathématiquement, la visibilité d'une face est déterminée de la façon suivante: soit $Ax + By + Cz + D$ l'équation de la face en question et $[x_o, y_o, z_o]$ la position de l'observateur. Si $Ax_o + By_o + Cz_o + D \leqq 0$, alors cette face est auto-cachée.

Lorsque la position de l'observateur varie, les objets, et en particulier leurs points subissent un changement de repère, se traduisant par une rotation et/ou une translation. Ce changement de repère est effectué par un processeur géométrique selon la formule suivante, qui permet d'exprimer les coordonnées absolues de chaque point $(x_m, y_m, z_m)$ dans le repère de l'observateur $(x_o, y_o, z_o)$ :

$$
\begin{bmatrix} x_o \\ y_o \\ z_o \end{bmatrix} = \begin{bmatrix} r_{11} & r_{12} & r_{13} \\ r_{21} & r_{22} & r_{23} \\ r_{31} & r_{32} & r_{33} \end{bmatrix} \bullet \begin{bmatrix} x_m \\ y_m \\ z_m \end{bmatrix} + \begin{bmatrix} t_x \\ t_y \\ t_z \end{bmatrix}
$$

on peut ajouter le cas échéant des facteurs d'échelles à cette matrice.

Dans cette équation, les coefficients $r_{11}$ à $r_{33}$ se rapportent aux rotations et les coefficients $t_x, t_y, t_z$ aux translations. Ces calculs sont effectués de manière vectorielle.

Lorsque les coordonnées des points des objets sont calculées dans le repère de l'observateur, on procède à une troncature dans l'espace, afin d'éliminer tous les éléments se trouvant entre l'observateur et un plan de troncature dit plan de troncature avant. Ce plan, perpendiculaire à la direction d'observation, pouvant être entre l'observateur et le plan de projection ou au-delà de ce plan de projection. Les facettes tronquées par le plan de troncature avant sont découpées puis refermées par l'ajout d'un côté, comme décrit ci-dessous pour la troncature en 2D, mais ici elle est effectuée en 3D. Le cas échéant, on procède de même avec le plan de troncature arrière, qui est par exemple le plan de limite de visibilité (ligne d'horizon).

Le procédé de l'invention part du procédé connu en soi de génération d'image à ligne de balayage. Pour le mettre en oeuvre, on découpe les différents objets de la scène à afficher en facettes de la manière décrite ci-dessus. Ces facettes peuvent être aussi bien concaves que convexes trouées ou pleines, distinctes ou coplanaires.

De préférence, on trie préalablement en profondeur les facettes selon un procédé connu en soi (tel que le procédé à priorités statiques par exemple), ceci afin d'accélérer les tests de profondeurs relatives.

Les facettes étant déterminées comme indiqué ci-dessus, on les réunit en "hyperfacettes", définies comme décrit ci-dessus en référence à la figure 1, ce qui permet de n'effectuer de calculs de profondeur qu'aux endroits nécessaires, à savoir là où se rencontrent, lors du balayage des lignes de l'image, les changements d'entités (alors que ces calculs sont effectués à chaque point dans le cas du procédé Z-buffer, pour chaque changement de face pour le procédé à priorité, et pour chaque plage pour le procédé de WATKINS).

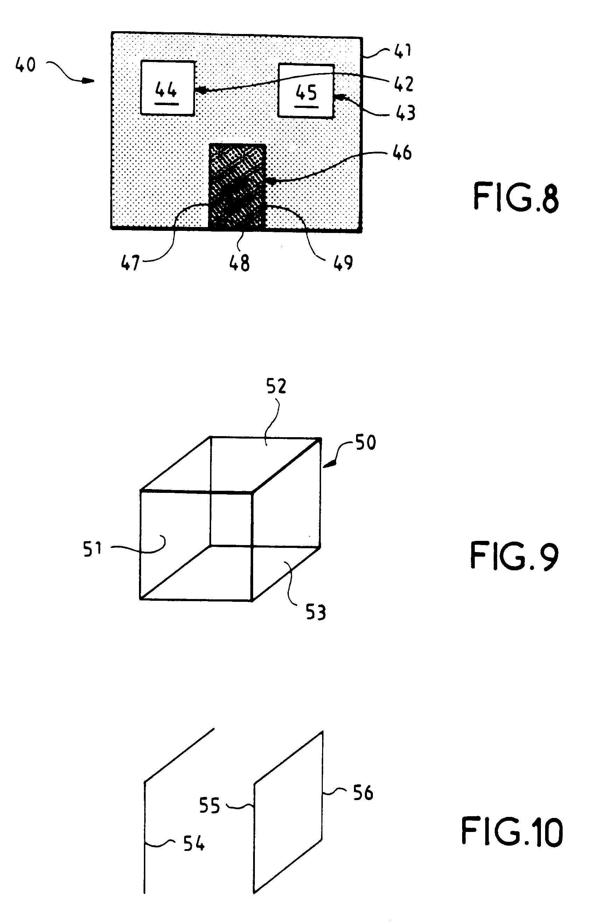

Pour la mise en oeuvre du procédé de l'invention, il ne faut pas qu'il y ait d'intersection physique entre deux facettes. Toutefois, pour contourner cette condition, on prévoit qu'une hyperfacette peut être trouée et peut comporter une ou plusieurs frontières intérieures, comme représenté sur l'exemple de la figure 8. Sur cette figure, on a représenté une hyperfacette plane 40 comportant une frontière extérieure 41 et deux frontières intérieures 42, 43 délimitant des trous 44, 45. Une facette 46 coplanaire avec l'hyperfacette 40 (et présentant par exemple une texture différente de celle de l'hyperfacette 40) partage trois côtés 47 à 49 avec cette dernière. On remarquera cependant qu'une hyperfacette ne présente pas nécessairement de frontière extérieure, tous ses côtés pouvant être partagés, comme c'est par exemple le cas d'un volume fermé tel que le cube représenté en figure 9. Dans ce cas, on dit que l'hyperfacette est homomorphe à une sphère. Dans le cas où l'hyperfacette comporte une frontière, c'est une carte planaire. Si l'hyperfacette comporte plus d'une frontière, c'est une carte planaire trouée. On détermine le nombre de frontières par la loi d'Euler, bien connue de la théorie des graphes : nombre de frontières = nombre de points - nombre de côtés.

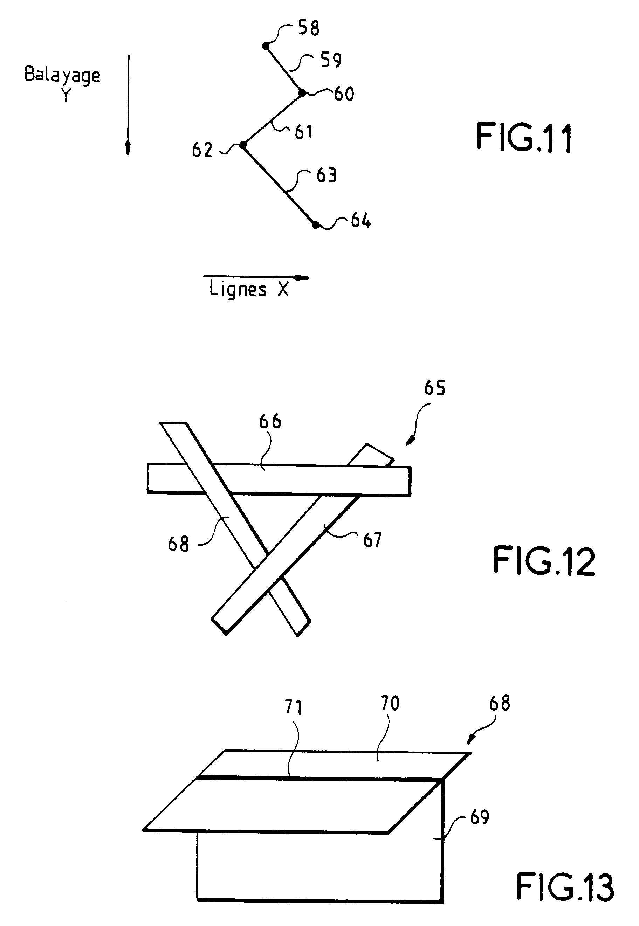

Le balayage de l'image projetée sur l'écran de visualisation se fait ligne par ligne (ou en variante colonne par colonne), de préférence après suppression des facettes auto-cachées. A la différence des procédés connus de balayage de lignes, le procédé de l'invention tient compte de la cohérence de l'image, c'est-à-dire qu'il considère que dans une hyperfacette une grande partie des informations relatives à chaque facette restent vraies pour toute l'hyperfacette. Une caractéristique importante du procédé de l'invention est de ne retenir pour chaque hyperfacette que les caractéristiques du côté "d'entrée" et du côté "de sortie" rencontrés lors du balayage. De plus, il introduit la notion d'"hypercôté", qui est une succession de côtés partageant à chaque fois un sommet et dont la longueur balayée, à partir d'un sommet partagé, augmente lorsque le balayage s'éloigne de ce sommet. Une caractéristique importante d'un hypercôté est que tous les côtés le composant sont de même type, c'est-à-dire qu'ils sont tous soit des frontières d'entrée, soit des frontières de sortie, soit des côtés partagés. Ainsi, pour l'exemple du cube 50 de la figure 9, on a supprimé les facettes auto-cachées 51 à 53, et il ne subsiste (figure 10) que trois hypercôtés, référencés 54 à 56. On notera que le balayage horizontal supprime, de façon connue en soi, les côtés horizontaux (qui sont rétablis par la suite, lors de l'affichage). Dans le cas de la figure 9, des côtés du cube sont horizontaux, et ne sont donc pas représentés, du fait de ce balayage horizontal.

Le premier hypercôté 54 est la frontière gauche du cube, le second 55 est un hypercôté partagé par les trois facettes visibles et le troisième, 56, constitue la frontière droite du cube 50.

On a représenté en figure 11 un exemple d'hypercôté quelconque 57. En suivant le sens de balayage Y, c'est-à-dire du haut vers le bas de la figure, on a en 58 le début de l'hypercôté, qui est aussi le début du côté 59. Ce côté se termine au point 60, qui est un sommet partagé avec le côté suivant 61 (ce deuxième côté 61 a une pente différente de celle du côté 59). Le deuxième côté 61 se termine au point 62, qui est un sommet partagé avec le côté suivant 63. Ce troisième côté 63 se termine au point 64, qui est en même temps la fin de l'hypercôté 57.

Le processeur mémorise, lors du balayage de l'image, les points précités 58, 60, 62 et 64, dans une liste triée en Y (sens du balayage vertical). Cette liste permet de déterminer, lors du balayage de l'image, quels sont les côtés à détruire, à modifier on à ajouter. La modification et la destruction de côtés sont des opérations bien connues en soi qui sont mises en oeuvre par manipulation de pointeurs.

De façon avantageuse, on trie en X la liste des côtés à ajouter pour chaque ligne de balayage de façon à simplifier l'insertion des nouveaux côtés dans la liste des côtés intersectés. En effet, l'insertion d'une liste triée dans une autre liste triée (selon le même critère, bien entendu) est très rapide (O/N) et permet d'éviter de procéder au tri selon la valeur en X des côtés intersectés, car le résultat de cette insertion est une liste triée (en X dans le cas présent).

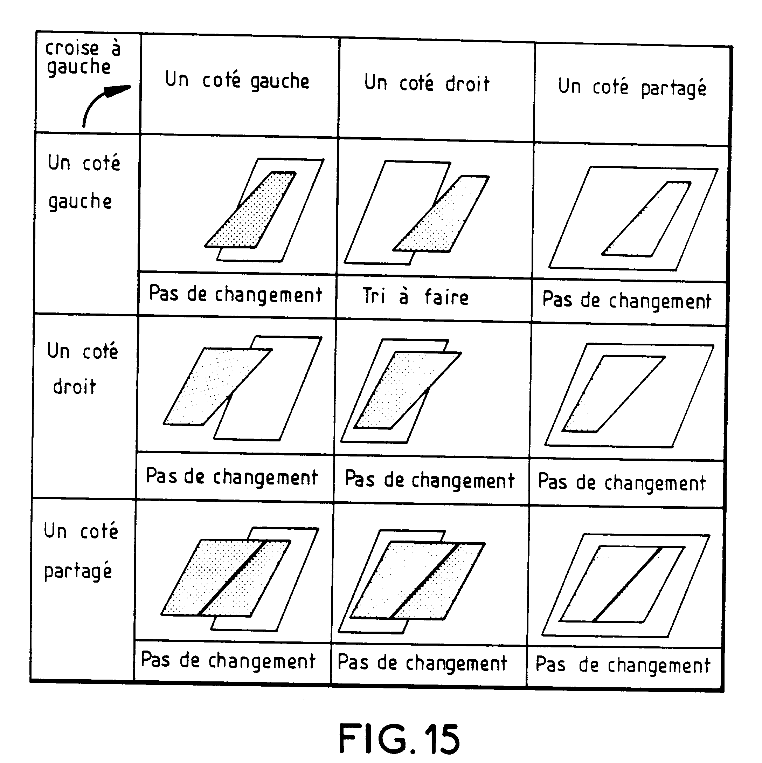

On procède ensuite au tri, en fonction de la valeur X des points d'intersection de la ligne de balayage avec les côtés rencontrés par cette ligne de balayage. La liste des côtés intersectés n'est modifiée que lors de l'insertion d'un nouveau côté ou par le croisement de deux côtés lors du passage d'une ligne de balayage à la suivante (cas décrit plus en détail ci-dessous en référence à la figure 15).

On établit la liste triée des segments à tracer de façon simple, en fonction du type de côté rencontré. Le balayage de lignes se fait dans un sens donné, par exemple de la gauche vers la droite.

Si le côté rencontré est un côté gauche (c'est, bien entendu le cas du premier côté rencontré), on ouvre un segment en l'insérant au bon endroit dans la liste des segments ouverts. En d'autres termes, on ne compare entre eux que les segments qui se trouvent sur la même surface de l'écran de visualisation (tous deux dans le même angle de vue).

Si le côté rencontré est un côté droit, cela signifie que l'on est sorti d'une hyperfacette: il suffit de fermer le dernier segment ouvert, c'est-à-dire de sortir le segment de la liste des segments ouverts, ce qui ne nécessite aucun calcul.

Si le côté rencontré est un côté partagé, cela veut dire que l'on a changé de facette, mais non d'hyperfacette. L'ordre des segments reste donc correct. Il suffit de fermer le dernier segment ouvert et d'ouvrir le nouveau segment en l'insérant exactement à la même place, ce qui ne nécessite aucun calcul.

Ces quatre tris successifs sont expliqués ci-dessous en référence aux figures 16 et 17.

Pour le tri en Y des côtés des facettes, on utilise un "panier" (structure de la mémoire vive à cases mémoire ordonnées). A chaque ligne de balayage correspond un panier. On range dans ces paniers les caractéristiques du sommet origine du côté rencontré (c'est-à-dire le premier sommet rencontré lors du balayage). Ces caractéristiques sont, en particulier, les coordonnées de ce sommet, le type du côté partant de ce sommet (gauche, droit ou partagé), les numéros des facettes bordant ce côté, et les attributs de ce côté (photométriques, colorimétriques, texture ...). Ainsi, en figure 16, on a représenté une suite de Paniers $P_m$, $P_n$, $P_p$ ... disposés en colonne, dans le sens croissant des numéros de paniers, le premier panier ($P_m$ correspondant à la valeur YA du (ou des) premier(s) sommet(s) rencontré(s) lors du balayage de l'image. Comme représenté de façon simplifiée en figure 17, la première ligne de balayage rencontrant au moins un sommet est la ligne d'ordonnée YA (les ordonnées des lignes de balayage sont croissantes à partir du haut de l'écran). Cette première ligne rencontre les sommets supérieurs relatifs aux côtés C1, C2 et C3. Ces côtés sont donc rangés dans l'ordre, dans le panier YA. Les lignes de balayage suivantes rencontrent toujours les mêmes côtés C1, C2 et C3. Il n'y a pas de changement, et donc pas de rangement dans d'autres paniers, qui restent vides. A la ligne de balayage d'ordonnée YB, le balayage rencontre un sommet supérieur relatif au côté C4. Ce côté est donc rangé dans le deuxième panier $P_n$ correspondant à YB.

Ensuite, à l'intérieur d'un même panier, on trie les côtés en X, c'est-à-dire dans l'ordre dans lequel le balayage les rencontre : par exemple C1, puis C2, puis C3 pour le panier YA. Ce tri permet d'accélérer la phase suivante.

Pour chaque ligne de balayage, on établit la liste, triée en X des côtés intersectés. La première liste est constituée tout simplement du premier panier $P_m$. Cette liste est maintenant triée par mise à jour au fur et à mesure du balayage des lignes. Ainsi, par exemple (figure 17), il faut inverser l'ordre de C2 et de C3 lors du passage sur leur point de croisement CR.

Lorsque le balayage arrive à la ligne correspondant au panier YB (apparition du sommet de C4), il suffit d'insérer le contenu du panier YB (déjà trié, comme pour tous les autres paniers) dans cette liste. Lorsque le balayage arrive à la ligne YC (correspondant au sommet inférieur de C1), il suffit d'extraire de cette liste le contenu relatif au côté C1, ce qui ne nécessite aucun calcul.

A partir de la liste ainsi obtenue, on calcule la liste des segments à tracer pour chaque ligne. Cette liste doit être tirée en Z (en profondeur) pour éliminer les parties cachées.

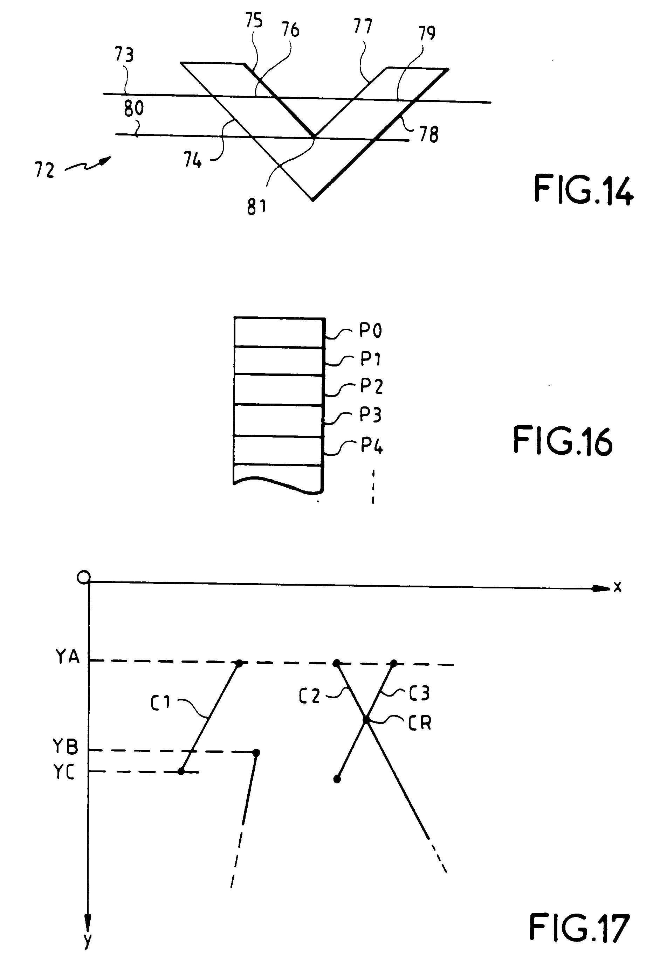

Le test de profondeur réalisé selon le procédé de l'invention doit être plus complet que les tests généralement employés. En effet, ce test doit donner une réponse correcte même lorsqu'un pixel examiné (ou même une ligne de balayage considérée est commun à deux ou plusieurs facettes). On a illustré de tels exemples en figures 12 et 13.

Sur la figure 12, un objet 65 est formé de trois bandes 66 à 68, sensiblement rectangulaires, disposées en triangle et entrecroisées aux sommets de ce triangle. Chacune des facettes que sont ces bandes ne garde pas la même priorité sur toute l'image. par exemple, la facette 66, qui passe derrière la facette 68 à son extrémité gauche est moins prioritaire que cette facette 68, mais à son extrémité droite, elle passe devant la facette 67, et est donc plus prioritaire que cette dernière. L'algorithme classique à priorité donne un résultat faux dans ce cas (puisque selon cet algorithme une facette a partout la même priorité). Seuls les algorithmes de Watkins et de "Z-buffer", ainsi que le procédé de l'invention donnent des résultats corrects dans ce cas.

Sur la figure 13, un objet 68 est formé d'une première facette rectangulaire 69 qui est sensiblement perpendiculaire à une deuxième facette rectangulaire 70, dont un côté 71 est tangent à la facette 69 et est parallèle aux lignes de balayage de l'image. Sur la ligne de balayage passant par le côté 71, les deux facettes 69 et 70 génèrent des segments confondus. Seul l'algorithme classique à priorité et le procédé de l'invention donnent un résultat correct dans ce cas.

Le test de profondeur conforme à l'invention est effectué lors de l'insertion d'un nouveau segment dans la liste des segments ouverts. On calcule, à l'aide de la projection de l'équation du plan et de la position (en x et y) de chaque pixel considéré, la différence de profondeur entre le point d'insertion et le premier segment de la liste des segments ouverts.

Si le point d'insertion considéré est devant le premier segment, on insère le nouveau segment avant le premier segment de la liste. Le nouveau segment est donc devant tous les autres segments de la liste.

Si le point d'insertion considéré est derrière le premier segment de la liste, on effectue la comparaison avec le segment ouvert suivant de la liste, et ainsi de suite.

Si le point d'insertion considéré est confondu en profondeur avec le segment ouvert considéré, on compare les pentes $\delta z/\delta x$, puis $\delta z/\delta y$ des facettes en cause pour déterminer quelle facette est devant l'autre (ce qui est par exemple le cas de l'objet de la figure 13).

Si on ne peut répondre à aucun des tests mentionnés ci-dessus après avoir parcouru la liste de tous les segments ouverts, cela signifie que les facettes considérées sont confondues. La raison en est soit que les facettes ont été triées selon des priorités statiques, soit une erreur de conception de la base de données caractérisant les hyperfacettes.

Pour optimiser le procédé de l'invention, on exploite les caractéristiques de cohérence des images d'une ligne à la suivante. Selon la théorie, cette cohérence existe s'il n'y a pas de nouveau côté, si aucun côté n'a disparu et s'il n'y a aucun croisement entre les côtés. Si ces conditions sont toutes satisfaites, alors la liste de segments ouverts reste correctement ordonnée pour la ligne suivante en question, et il n'y a donc pas lieu de la modifier, ce qui accélère le traitement. L'optimisation principale de l'algorithme est l'utilisation des propriétés des hyperfacettes lors du test de cohérence. L'optimisation hypercôté est à placer après cette optimisation principale.

Les trois hypothèses à vérifier sont :

1) -Aucun croisement de côtés, c'est ici qu'intervient le gain 1/9 du tableau de croisement entre côtés.

2) - Aucun côté ne disparaît, on démontre ici que l'ordre de la liste des segments n'est pas modifié sauf dans le cas particulier de la figure en V.

3) - Aucun nouveau côté, on utilise le tri fenêtré pour accélérer le traitement.

On remarque ensuite que le tri fenêtré peut aussi s'appliquer dans le cas ou l'hypothèse 1 n'est pas vérifiée et que l'on est dans le cas 1/9 du tableau des croisements.

Selon le procédé de l'invention, on optimise le traitement en considérant que le croisement entre deux côtés (appartenant à des facettes non coplanaires) ne modifie pas nécessairement l'ordre de la liste des segments. De toute façon, même lorsqu'il y a modification, celle-ci n'affecte que partiellement cette liste, et nécessite au maximum un tri fenêtré de la liste des segments ouverts, comme exposé ci-dessous.

On déduit du tableau de la figure 15 que parmi les neuf cas possibles d'intersections entre côtés (gauches, droits ou partagés), seul un cas est susceptible de modifier l'ordre des segments de la liste des segments ouverts, si l'on respecte la règle suivante : on n'insère pas un nouveau segment entre deux segments appartenant à la même facette ou hyperfacette.

L'utilisation des propriétés des hypercôtés permet également d'accélérer le traitement, en particulier lorsque l'on tient compte des propriétés attachées aux hypercôtés, ce qui permet de diminuer le nombre de débuts et de fins de côtés d'une ligne à la suivante: au passage des sommets partagés (tels que les sommets 60 et 62 de la figure 11) il n'y a pas à tenir compte de la fin d'un côté et du début du suivant, puisqu'au passage de ces sommets, on a toujours affaire au même hypercôté, dont les propriétés restent les mêmes.

De plus, l'utilisation des hypercôtés permet de simplifier le traitement de la liste des segments. En effet, on n'insère jamais un nouveau côté seul, mais forcément un côté gauche et un côté droit en même temps (puisqu'une facette, de surface non nulle, a forcément un côté gauche et un côté droit, dans le sens du balayage horizontal). Les coordonnées $[X_{min}, X_{max}]$ de ces deux côtés délimitent la plage dans laquelle la liste des segments ouverts doit être modifiée. En pratique, on procède à un tri fenêtré (limité par la fenêtre $X_{min}, X_{max}$) de la liste des segments ouverts, ce qui limite non pas le nombre de fois où cette hypothèse (insertion ou non) ne sera pas vérifiée, mais le nombre de segments à trier.

Réciproquement, pour une ligne de balayage donnée, lorsqu'un hypercôté ou un côté se termine (comme par exemple le côté 63 au point 64 en figure 11), il n'est pas le seul dans ce cas. Au minimum, un côté gauche et un côté droit se terminent pour la même ligne de balayage. Ceci implique la fermeture d'un ou de plusieurs segments de la liste des segments ouverts. Cette terminaison ne peut pas changer l'ordre de la liste des segments ouverts.

Toutefois, il existe un cas particulier tel que celui illustré en figure 14. Sur cette figure, on a représenté un ruban 72 ayant sensiblement la forme d'un "V". Une ligne de balayage telle que la ligne 73 rencontre, dans l'ordre, un côté gauche 74 et un côté droit 75, ce qui ouvre un premier segment 76, puis, après un vide, un autre côté gauche 77 et un autre côté droit 78, ce qui ouvre un deuxième segment 79. Lorsque la ligne de balayage devient la ligne 80 passant par le point 81 auquel se rencontrent les côtés 75 et 77, ces deux côtés se terminent, mais en plus de sortir de la liste le segment 79, il faut changer l'extrémité droite de 76.

## Revendications

1. Procédé d'élimination en temps réel des parties cachées d'images de synthèse, caractérisé par le fait qu'il part d'une structure de données décomposant les objets à visualiser en facettes planes, qu'il consiste à établir des liens entre facettes ayant des côtés partagés, et entre côtés partageant à chaque fois un même sommet, à balayer les lignes successives de l'image à visualiser, à établir la liste triée dans le sens de balayage des côtés intersectés par la ligne de balayage en cours, à établir la liste triée des segments à tracer, et, à chaque insertion d'un nouveau segment dans la liste des segments ouverts, à calculer la différence de profondeur entre le point d'insertion et les segments de la liste des segments ouverts.

2. Procédé selon la revendication 1, caractérisé par le fait que les facettes sont préalablement triées en profondeur.

3. Procédé selon la revendication 1 ou 2, caractérisé par le fait que les calculs de profondeur ne sont effectués qu'aux endroits où le balayage rencontre des changements d'entités.

4. Procédé selon l'une des revendications précédentes, caractérisé par le fait que des facettes ayant des côtés partagés sont groupées en hyperfacettes et que pour chaque hyperfacette on ne retient, lors du balayage, que les caractéristiques du côté d'entrée et du côté de sortie rencontrés par la ligne de balayage.

**FIG.1**

**FIG.2**

**FIG.3**

**FIG.4**

**FIG.5**

**FIG.7**

Attributs topologiques

| Point 1 |
| Point 2 |
| Face gauche |
| Face droite |
| Liaisons |

COTÉS

POINTS

FACES

Attributs géométriques

| Coordonnées 3D |
| X,Y,Z |

Attributs géométriques

| Equation du plan 3D |
| $Ax + By + Cz + D = 0$ |

Attributs photométriques

| Couleur |
| Texture |
| Transparence |

# FIG.6

FIG.8

FIG.9

FIG.10

Balayage
Y

58
59
60
61
62
63
64

Lignes X

FIG.11

65
66
68
67

FIG.12

71
70
68
69

FIG.13

FIG.14

FIG.16

FIG.17

| croise à gauche ➚ | Un coté gauche | Un coté droit | Un coté partagé |
|---|---|---|---|
| Un coté gauche | Pas de changement | Tri à faire | Pas de changement |
| Un coté droit | Pas de changement | Pas de changement | Pas de changement |
| Un coté partagé | Pas de changement | Pas de changement | Pas de changement |

# FIG. 15

Office européen
des brevets

**RAPPORT DE RECHERCHE EUROPEENNE**

Numero de la demande

EP 94 40 0188

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | COMPUTER GRAPHICS vol. 18, no. 3 , Juillet 1984 , NEW-YORK U.S. pages 67 - 76 NIIMI E.A. 'A PARALLEL PROCESSOR SYSTEM FOR THREE-DIMENSIONAL COLOR GRAPHICS' * le document en entier * --- | 1-4 | G06F15/72 |
| A | US-A-4 594 673 (GTI) * le document en entier * --- | 1-4 | |
| A | COMPUTERS AND GRAPHICS. vol. 15, no. 4 , 1991 , OXFORD GB pages 535 - 544 RUHLMANN AND MCKEEMAN 'LOCAL SEARCH: A NEW HIDDEN LINE ELIMINATION ALGORITHM TO DISPLAY SPHERICAL COORDINATE EQUATIONS' * le document en entier * --- | 1-4 | |
| A | IEEE COMPUTER GRAPHICS AND APPLICATIONS. vol. 7, no. 7 , Juillet 1987 , NEW YORK US pages 14 - 23 MONTANI 'VECTOR AND RASTER HIDDEN-SURFACE REMOVAL USING PARALLEL CONNECTED STRIPES' * le document en entier * --- | 1-4 | **DOMAINES TECHNIQUES RECHERCHES (Int.Cl.5)** G06F |
| A | COMPUTER GRAPHICS vol. 18, no. 3 , Juillet 1984 , NEW YORK US pages 95 - 102 CROCKER 'INVISIBILITY COHERENCE FOR FASTER SCAN-LINE HIDDEN SURFACE ALGORITHMS' * le document en entier * ----- | 1-4 | |

Le présent rapport a été établi pour toutes les revendications

| Lieu de la recherche | Date d'achèvement de la recherche | Examinateur |
|---|---|---|
| LA HAYE | 9 Mai 1994 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)